# EUROPEAN PATENT SPECIFICATION

(11) **EP 0 508 502 B1**
(45) Date of publication and mention of the grant of the patent: **24.07.1996**
(21) Application number: 92200514.5
(22) Date of filing: 21.02.1992
(51) Int. Cl.: C08G 67/02

(54) **Catalyst compositions**
Katalysatorzusammensetzungen
Compositions de catalyseur

(30) Priority: 26.02.1991 NL 9100341
(43) Date of publication of application: 14.10.1992
(73) Proprietor: SHELL INTERNATIONALE RESEARCH MAATSCHAPPIJ B.V., NL-2596 HR Den Haag (NL)
(72) Inventor: Drent, Eit, NL-1031 CM Amsterdam (NL); Keijsper, Johannes Jacobus, NL-1031 CM Amsterdam (NL)

(56) References cited:
- EP-A- 486 103
- EP-A- 501 576
- EP-A- 0 245 893
- EP-A- 0 246 683

## Description

The invention relates to novel catalyst compositions suitable for use in the preparation of polymers of carbon monoxide with one or more olefinically unsaturated compounds.

It is known that linear polymers of carbon monoxide with one or more olefinically unsaturated compounds in which polymers the units from carbon monoxide on the one hand and the units from the olefinically unsaturated compounds on the other hand are present in a substantially alternating arrangement can be prepared by contacting the monomers at elevated temperature and pressure with a catalyst composition on the basis of:
a) a Group VIII metal compound,
b) a strong organic acid such as para-toluenesulphonic acid or methylsulphonic acid, and
c) a dentate ligand containing at least two phosphorus-, nitrogen- or sulphur-containing dentate groups through which the dentate ligand can complex with the Group VIII metal.

It is furthermore known from EP-A-246683 that the present polymers can also be prepared if component b) in the catalyst is replaced by tin chloride or germanium chloride. Such salts of a strong acid and a weak base are electron acceptors, and thus "Lewis" acids. Although linear alternating polymers can be prepared with these catalysts containing one of the aforesaid Lewis acids as component b), their polymerization activity is considerably less than that of catalysts containing a strong organic acid as component b).

Continued research into this subject has now surprisingly shown that catalysts exhibiting a high polymerization activity can be obtained by incorporating in catalysts on the basis of components a) and c), as component b) a Lewis acid of the general formula MFₙ, in which M represents an element that can form a Lewis acid with fluorine, F represents fluorine and n has the value 3 or 5. Compositions on the basis of components a) and c) which contain as component b) a Lewis acid of the general formula MFₙ are novel.

The present patent application therefore relates to novel catalyst compositions on the basis of:
a) a Group VIII metal compound,
b) a Lewis acid of the general formula MFₙ in which M represents an element that can form a Lewis acid with fluorine, F represents fluorine and n has the value 3 or 5, and
c) a dentate ligand containing at least two phosphorus-, nitrogen- or sulphur-containing dentate groups through which the dentate ligand can complex with the Group VIII metal.

The patent application further relates to the application of these catalyst compositions in the preparation of polymers of carbon monoxide with one or more olefinically unsaturated compounds.

Group VIII metals are understood in this patent application to be the noble metals ruthenium, rhodium, palladium, osmium, iridium and platinum, as well as the iron group metals iron, cobalt and nickel. In the process according to the invention, catalysts are preferably used which contain a Group VIII metal selected from palladium, nickel and cobalt. Palladium is particularly preferred as Group VIII metal. The incorporation of the Group VIII metal in the catalyst preferably takes place in the form of a salt of a carboxylic acid having preferably less than five carbon atoms, in particular in the form of an acetate.

The compositions according to the invention should contain as component b) a Lewis acid of the general formula MFₙ. Examples of suitable Lewis acids are boron trifluoride, antimony pentafluoride, phosphorus pentafluoride, aluminium trifluoride, gallium trifluoride, arsenic pentafluoride, tantalum pentafluoride, niobium pentafluoride and indium trifluoride. The use of boron trifluoride, aluminium trifluoride and antimony pentafluoride is preferred. Component b) is preferably present in a quantity of 0.5 to 200 and in particular 1.0 to 100 mol per g.atom Group VIII metal.

In addition to components a) and b), the compositions according to the invention should include as component c) a dentate ligand containing at least two phosphorus-, nitrogen- or sulphur-containing dentate groups through which the dentate ligand can complex with the Group VIII metal. Although dentate ligands containing more than two dentate groups such as the tetradentate ligand 1,8-bis[bis-(2-methoxyphenyl)phosphino]-2,7-bis-[bis(2-methoxyphenyl)phosphinomethyl]octane, are suitable, bidentate ligands are preferred.

If as component c) a bidentate ligand is used which via two sulphur-containing dentate groups present therein can complex with the Group VIII metal, a component c) is preferred of the general formula R¹S-R-SR¹ in which R¹ represents an optionally polar substituted hydrocarbyl group and R represents a divalent organic bridging group containing at least two carbon atoms in the bridge. Examples of such compounds are 1,2-bis(ethylthio)ethane, cis-1,2-bis(benzylthio)ethene and 1,2-bis(phenylthio)propane.

If as component c) a bidentate ligand is used which via two nitrogen-containing dentate groups present therein can complex with the Group VIII metal, a component c) is preferred of the general formula 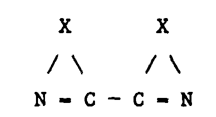 in which X represents an organic bridging group containing three or four atoms in the bridge, of which at least two are carbon atoms. Examples of such compounds are 2,2'-dipyridyl and 1,10-phenanthroline.

Preferably, as component c) in the catalysts a bidentate ligand is used which via two phosphorus-containing dentate groups present therein can complex with the Group VIII metal. If such a bidentate ligand is used as component c), a compound of the general formula (R¹)₂P-R-P(R¹)₂ is preferred in which R and R¹ have the previously indicated meanings. In that case, there is particular preference for a compound in which R¹ represents an aryl group having at the ortho position relative to the phosphorus atom to which it is linked an alkoxy group as substituent and in which R contains three atoms in the bridge. An example of such a compound is 1,3-bis[bis(2-methoxyphenyl)phosphino]propane.

If as component c) a bidentate ligand is used which via two sulphur- or nitrogen-containing dentate groups present therein can complex with the Group VIII metal, the quantity employed is preferably 0.5-100 and in particular 1-50 mol per g.atom Group VIII metal. If a bidentate ligand is used which via two phosphorus-containing dentate groups present therein can complex with the Group VIII metal, the quantity employed is preferably 0.5-2 and in particular 0.75-1.5 mol per g.atom Group VIII metal.

To enhance the activity of the compositions, an organic oxidizing agent can also be incorporated therein as component d). 1,4-Quinones such as 1,4-benzoquinone and 1,4-naphthoquinone and aromatic nitro compounds such as nitrobenzene are very suitable. The quantity of organic oxidizing agent used is preferably 5-5000 and in particular 10-1000 mol per g.atom Group VIII metal.

The preparation of the present linear alternating polymers hitherto has been carried out mainly as liquid phase polymerization, the monomers being contacted with a solution of the catalyst in a liquid non-polymerizable diluent in which the polymers are insoluble or virtually insoluble. During the polymerization the polymers are obtained in the form of a suspension in the diluent. After the required degree of polymerization has been reached, the polymerization is generally terminated by cooling the reaction mixture and releasing the pressure. The polymers are isolated from the suspension, for example by filtration or centrifuging. The pure diluent to be used for a following polymerization is recovered from the remaining liquid, e.g. by distillation. The diluents used in the polymerization preferably consist at least partly of a protic liquid. Very suitable diluents are lower aliphatic alcohols and in particular methanol.

During the investigation by the applicant concerning the novel catalysts it was found that they are also eligible for use in carrying out the polymerization as gas phase polymerization. This is characterized in that the monomers are contacted with the catalyst substantially in the absence of a liquid non-polymerizable diluent. For the preparation of the polymers on an industrial scale, gas phase polymerization is much to be preferred to liquid phase polymerization on account of the fact that with gas phase polymerization the above-mentioned filtration or centrifuging step, as well as the distillation step, can be omitted. If applied on an industrial scale, such separation and purification steps involve considerable expense.

To improve the behaviour of the catalysts, the gas phase polymerization is preferably carried out in the presence of a small quantity of alcohol and/or hydrogen. The lower aliphatic alcohols are especially suitable as alcohols. The use of methanol is particularly preferred. The quantity of this alcohol is so small that under the polymerization conditions it is substantially in the gas phase.

As regards the way in which, during the gas phase polymerization, the catalyst is presented to the monomer mixture to be polymerized, a number of possibilities can be distinguished. Firstly, the catalyst as such, i.e. without carrier material, can be introduced into the polymerization reactor. Optionally, the catalyst can be dissolved or suspended beforehand in a liquid diluent and, after the solution or suspension has been introduced into the reactor, for example by spraying, the diluent can be substantially removed. Preferably an alcohol, and in particular methanol, is used as diluent. If an alcohol is used, its removal is carried out such that a small quantity remains behind in the catalyst. The gas phase polymerization is preferably carried out using the catalyst applied to a carrier material. The application of the catalyst to the carrier material can be accomplished very suitably by contacting the carrier material with a solution or suspension of the catalyst in a liquid diluent and then substantially removing the diluent. As diluents, preferably alcohols and in particular methanol are used. If an alcohol is used as diluent, its removal is preferably carried out such that a small quantity remains behind in the catalyst on the carrier. As carrier material, a porous carrier material is preferably chosen. Both inorganic and organic carrier materials are eligible as carrier materials for the catalyst. Examples of suitable carrier materials are silica, alumina, talc, charcoal, cellulose, dextrose and dextran gel. Polymers such as polyethylene, polypropylene and polystyrene can also be used as carrier materials. Carrying out the gas phase polymerization with the catalyst applied to a carrier material results in products in which the prepared polymer occurs together with the carrier material used. Depending on the nature and quantity used of the carrier material, products with a very wide range of properties and applications can be prepared. If desired, the carrier material can be wholly or partly removed from the product at the end of the polymerization by treating the product with a solvent in which the carrier material is soluble but the prepared polymer is insoluble.

In the gas phase polymerization according to the invention, a polymer whose structure and composition corresponds substantially to that of the polymer to be prepared is preferably used as carrier material for the catalyst. Polymers prepared both by liquid phase polymerization and by gas phase polymerization are eligible for this purpose.

As olefinically unsaturated compounds which according to the invention can be polymerized with carbon monoxide, compounds are eligible which consist exclusively of carbon and hydrogen, as well as compounds which besides carbon and hydrogen also contain one or more heteroatoms. The process according to the invention is preferably used for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process according to the invention is in particular very suitable for use in the preparation of copolymers of carbon monoxide with ethene and in the preparation of terpolymers of carbon monoxide with ethene and an α-olefin, in particular propene.

The quantity of catalyst used in the process according to the invention can vary within wide limits. Per mol olefinically unsaturated compound to be polymerized, a quantity of catalyst is preferably used which contains 10⁻⁷ to 10⁻³ and in particular 10⁻⁶ to 10⁻⁴ g.atom Group VIII metal.

The polymerization is preferably carried out at a temperature of 25-150°C and a pressure of 2-150 bar and in particular at a temperature of 30-130°C and a pressure of 5-100 bar. The molar ratio of the olefinically unsaturated compounds relative to carbon monoxide is preferably 10:1 to 1:10 and in particular 5:1 to 1:5. The polymer preparation according to the invention can be carried out either batchwise or continuously.

The invention will now be illustrated with reference to the following examples.

### Example 1

A carbon monoxide/ethene copolymer was prepared as follows. A catalyst was prepared by absorbing a catalyst solution containing 1.5 ml methanol,
0.5 ml tetrahydrofuran,
0.0095 mmol palladium acetate,
0.028 mmol boron trifluoride-etherate, and
0.0104 mmol 1,3-bis[bis(2-methoxyphenyl)phosphino]propane on 8 g of a linear alternating carbon monoxide/ethene copolymer.

The catalyst thus prepared was introduced into a stirred autoclave with a volume of 300 ml. After the air in the autoclave had been displaced by nitrogen, the autoclave contents were brought to 85°C and a 1:1 carbon monoxide/ethene mixture was forced in until a pressure of 50 bar was reached. Finally, hydrogen was forced in until a pressure of 55 bar was reached. During the polymerization the pressure was maintained at 55 bar by forcing in a 1:1 carbon monoxide/ethene mixture. After 10 hours the polymerization was terminated by cooling the reaction mixture to room temperature and releasing the pressure.

89.4 g copolymer was obtained. The polymerization rate was 7.9 kg copolymer/(g palladium.hour).

### Example 2

A carbon monoxide/ethene copolymer was prepared in substantially the same way as in example 1, but with the following differences:
a) the catalyst solution contained 0.024 mmol antimony pentafluoride instead of boron trifluoride-etherate, and
b) the reaction time was 4 hours instead of 10 hours.

32.6 g copolymer was obtained. The polymerization rate was 6.1 kg copolymer/(g palladium.hour).

### Example 3

A carbon monoxide/ethene copolymer was prepared in substantially the same way as in example 1, but with the following differences:
a) the catalyst solution contained 0.028 mmol aluminium trifluoride instead of boron trifluoride-etherate, and
b) the reaction time was 4.4 hours instead of 10 hours.

20.4 g copolymer was obtained. The polymerization rate was 2.8 kg copolymer/(g palladium.hour).

### Example 4

A carbon monoxide/ethene copolymer was prepared in substantially the same way as in example 1, but with the following differences:
a) the catalyst solution contained 0.19 mmol boron trifluorideetherate instead of 0.028 mmol, and
b) the reaction time was 4.2 hours instead of 10 hours.

20.3 g copolymer was obtained. The polymerization rate was 2.9 kg copolymer/(g palladium.hour).

### Example 5

A carbon monoxide/ethene copolymer was prepared as follows. Into a stirred autoclave with a volume of 250 ml a catalyst solution was introduced containing
50 ml methanol,
0.1 mmol palladium acetate,
2 mmol boron trifluoride-etherate, and
0.15 mmol 1,3-bis(diphenylphosphino)propane. After the air in the autoclave had been displaced by nitrogen, 30 bar ethene was forced in and then 30 bar carbon monoxide. Finally the autoclave contents were brought to 60°C. After 1 hour the polymerization was terminated by cooling the reaction mixture to room temperature and releasing the pressure. The formed polymer was filtered off, washed with methanol and dried.

10 g copolymer was obtained. The polymerization rate was 1 kg copolymer/(g palladium.hour).

### Example 6

A carbon monoxide/ethene copolymer was prepared in substantially the same way as in example 1, but with the following differences:
a) the catalyst solution contained 0.028 mmol methylsulphonic acid instead of boron trifluoride-etherate, and
b) the reaction time was 5 hours instead of 10 hours.

15.6 g copolymer was obtained. The polymerization rate was 1.5 kg copolymer/(g palladium.hour).

### Example 7

A carbon monoxide/ethene copolymer was prepared in substantially the same way as in example 1, but with the following differences:
a) the catalyst solution contained 0.19 mmol methylsulphonic acid instead of boron trifluoride-etherate, and
b) the reaction time was 4.8 hours instead of 10 hours.

10.9 g copolymer was obtained. The polymerization rate was 0.6 kg copolymer/(g palladium.hour).

### Example 8

A carbon monoxide/ethene copolymer was prepared in substantially the same way as in example 1, but with the following differences:
a) the catalyst solution contained 0.024 mmol para-toluenesulphonic acid instead of boron trifluoride-etherate, and
b) the reaction time was 4.6 hours instead of 10 hours.

16.8 g copolymer was obtained. The polymerization rate was 1.9 kg copolymer/(g palladium.hour).

### Example 9

A carbon monoxide/ethene copolymer was prepared in substantially the same way as in example 1, but with the following differences:
a) the catalyst solution contained 0.19 mmol para-toluenesulphonic acid instead of boron trifluoride-etherate, and
b) the reaction time was 4.6 hours instead of 10 hours.

8.3 g copolymer was obtained. The polymerization rate was 0.1 kg copolymer/(g palladium.hour).

### Example 10

Example 5 was substantially repeated, but with the following differences:
a) the catalyst solution contained 2 mmol aluminium trichloride instead of boron trifluoride-etherate,
b) the reaction temperature was 80°C instead of 60°C, and
c) the reaction time was 5 hours instead of 1 hour. Only a trace of polymer was formed.

### Example 11

A carbon monoxide/ethene copolymer was prepared in substantially the same way as in example 5, but with the following differences:
a) the catalyst solution contained 2 mmol tin dichloride instead of boron trifluoride-etherate,
b) the reaction temperature was 80°C instead of 60°C, and
c) the reaction time was 5 hours instead of 1 hour.

5.5 g copolymer was obtained. The polymerization rate was 110 g copolymer/(g palladium.hour).

### Example 12

A carbon monoxide/ethene copolymer was prepared as follows. Into a stirred autoclave with a volume of 300 ml a catalyst solution was introduced containing
50 ml methanol,
0.1 mmol palladium acetate,
0.2 mmol methylsulphonic acid, and 0.15 mmol 1,3-bis[bis(2-methoxyphenyl)phosphino]propane. After the air in the autoclave had been displaced by nitrogen and the autoclave contents had been brought to 89°C, a 1:1 carbon monoxide/ethene mixture was forced in until a pressure of 55 bar had been reached. During the polymerization the pressure was maintained at 55 bar by forcing in a 1:1 carbon monoxide/ethene mixture. After 2 hours the polymerization was terminated by cooling the reaction mixture to room temperature and releasing the pressure. The polymer was filtered off, washed with methanol and dried.

22.3 g copolymer was obtained. The polymerization rate was 10.5 kg copolymer/(g palladium.hour).

### Example 13

A carbon monoxide/ethene copolymer was prepared in substantially the same way as in example 12, but with the following differences:
a) the catalyst solution contained 0.19 mmol para-toluenesulphonic acid instead of methylsulphonic acid, and
b) the reaction temperature was 88°C instead of 89°C.

19.5 g copolymer was obtained. The polymerization rate was 9.7 kg copolymer/(g palladium.hour).

Of the examples 1-13, examples 1-5 are according to the invention. In these examples, catalysts according to the invention were used which contained as component b) a Lewis acid of the general formula MFₙ. Examples 1-4 relate to gas phase polymerization. In example 5 liquid phase polymerization was applied. Examples 6-13 fall outside the scope of the invention, and were included in the patent application for comparison. Examples 6-9 relate to gas phase polymerization using catalysts containing a strong organic acid as component b). In examples 10-13 liquid phase polymerization was applied. In examples 10 and 11 use was made of a catalyst containing as component b) a Lewis acid that did not satisfy the definition of MFₙ. Examples 12 and 13 were carried out using catalysts containing a strong organic acid as component b).

Comparison of the results of examples 1-4 with those of examples 6-9 shows the gain in the polymerization rate which occurs if in the gas phase preparation of the polymers a strong organic acid in the catalyst is replaced by a Lewis acid according to the invention.

Example 10 shows that the Lewis acid aluminium trichloride is unsuitable to serve as component b) in a catalyst used in the liquid phase polymer preparation. Example 11 demonstrates that a catalyst containing the Lewis acid tin dichloride as component b) displays a low polymerization rate in the liquid phase polymerization.

Comparison of the results of example 5 with those of examples 12 and 13 shows that if in the liquid phase polymerization a strong organic acid in the catalyst is replaced by a Lewis acid according to the invention, the high polymerization rate is substantially maintained. In connection herewith, it is pointed out that examples 12 and 13 were carried out at 89 and 88°C respectively and at constant pressure, whereas the reaction temperature for example 5 was only 60°C and the experiment was carried out under decreasing pressure.

It was established by NMR analysis that the polymers prepared according to examples 1-9 and 11-13 were built up of linear chains in which the units from carbon monoxide and the units from ethene occurred in an alternating manner.

## Claims (Claims for the following Contracting State(s): BE, DE, FR, GB, IT, NL)

1. Catalyst compositions, characterized in that they are based on:
a) a Group VIII metal compound,
b) a Lewis acid of the general formula MFₙ, in which M represents an element that can form a Lewis acid with fluorine, F represents fluorine and n has the value 3 or 5, and
c) a dentate ligand containing at least two phosphorus-, nitrogen- or sulphur-containing dentate groups through which the dentate ligand can complex with the Group VIII metal.

2. Catalyst compositions according to claim 1, characterized in that they contain boron trifluoride, aluminium trifluoride or antimony pentafluoride as component b).

3. Compositions according to claim 1 or 2, characterized in that they contain 0.5-200 mol of component b) per g.atom Group VIII metal.

4. Compositions according to any of claims 1-3, characterized in that they contain as component c) a compound of the general formula (R¹)₂P-R-P(R¹)₂ in which R¹ represents an optionally polar substituted hydrocarbyl group and R represents a divalent organic bridging group containing at least two carbon atoms in the bridge.

5. Compositions according to claim 4, characterized in that they contain 0.5-2 mol component c) per g.atom Group VIII metal.

6. Process for the preparation of polymers, characterized in that polymers of carbon monoxide with one or more olefinically unsaturated compounds are prepared by contacting the monomers at a temperature of 25-150°C and a pressure of 2-150 bar with a catalyst composition according to any of claims 1-5.

7. Process according to claim 6, characterized in that the polymerization is carried out as liquid phase polymerization by contacting the monomers with a solution of the catalyst composition in a liquid non-polymerizable diluent in which the polymers are insoluble or virtually insoluble.

8. Process according to claim 6, characterized in that the polymerization is carried out as gas phase polymerization by contacting the monomers with the catalyst composition substantially in the absence of a liquid non-polymerizable diluent.

9. Process according to any of claims 6-8, characterized in that per mol olefinically unsaturated compound to be polymerized a quantity of catalyst composition is used which contains 10-⁷_ 10 ⁻³ g.atom Group VIII metal, and that it is carried out at a temperature of 30-130°C, a pressure of 5-100 bar and a molar ratio of the olefinically unsaturated compounds relative to carbon monoxide of 10:1 to 1:10.

## Claims (Claims for the following Contracting State(s): ES)

1. Process for the preparation of a catalyst composition, characterized by combining:
a) a Group VIII metal compound,
b) a Lewis acid of the general formula MFₙ, in which M represents an element that can form a Lewis acid with fluorine, F represents fluorine and n has the value 3 or 5, and
c) a dentate ligand containing at least two phosphorus-, nitrogen- or sulphur-containing dentate groups through which the dentate ligand can complex with the Group VIII metal.

2. Process according to claim 1, characterized in that component b) is selected from boron trifluoride, aluminium trifluoride and antimony pentafluoride.

3. Process according to claim 1 or 2, characterized in that component b) is applied in a quantity of 0.5-200 mol per g.atom Group VIII metal.

4. Process according to any of claims 1-3, characterized in that component c) is a compound of the general formula (R¹)₂P-R-P(R¹)₂ in which R¹ represents an optionally polar substituted hydrocarbyl group and R represents a divalent organic bridging group containing at least two carbon atoms in the bridge.

5. Process according to claim 4, characterized in that component c) is applied in a quantity of 0.5-2 mol per g.atom Group VIII metal.

6. Process for the preparation of polymers, characterized in that polymers of carbon monoxide with one or more olefinically unsaturated compounds are prepared by contacting the monomers at a temperature of 25-150 °C and a pressure of 2-150 bar with a catalyst composition which is obtainable by a process as claimed in any of claims 1-5.

7. Process according to claim 6, characterized in that the polymerization is carried out as liquid phase polymerization by contacting the monomers with a solution of the catalyst composition in a liquid non-polymerizable diluent in which the polymers are insoluble or virtually insoluble.

8. Process according to claim 6, characterized in that the polymerization is carried out as gas phase polymerization by contacting the monomers with the catalyst composition substantially in the absence of a liquid non-polymerizable diluent.

9. Process according to any of claims 6-8, characterized in that per mol olefinically unsaturated compound to be polymerized a quantity of catalyst composition is used which contains 10⁻⁷-10⁻³ g.atom Group VIII metal, and that it is carried out at a temperature of 30-130 °C, a pressure of 5-100 bar and a molar ratio of the olefinically unsaturated compounds relative to carbon monoxide of 10:1 to 1:10.

## Patentansprüche (Patentansprüche für folgende(n) Vertragsstaat(en): BE, DE, FR, GB, IT, NL)

1. Katalysatorzusazmensetzungen, dadurch gekennzeichnet, daß sie basieren auf:
a) einer Verbindung eines Metalls der Gruppe VIII,
b) einer Lewis-Säure der allgemeinen Formel MFₙ, worin M ein Element, das mit Fluor eine Lewis-Säure bilden kann, bedeutet, F für Fluor steht und n einen Wert von 3 oder 5 hat, und
c) einem zähnigen Liganden, der mindestens zwei phosphor-, stickstoff- oder schwefelhaltige zähnige Gruppen enthält, durch die der zähnige Ligand einen Komplex mit dem Metall der Gruppe VIII bilden kann.

2. Katalysatorzusammensetzungen nach Anspruch 1, dadurch gekennzeichnet, daß sie als Komponente b) Bortrifluorid, Aluminiumtrifluorid oder Antimonpentafluorid enthalten.

3. Zusammensetzungen nach Anspruch 1 oder 2, dadurch gekennzeichnet, daß sie 0,5-200 mol der Komponente b) pro Grammatom des Metalls der Gruppe VIII enthalten.

4. Zusammensetzungen nach einem der Ansprüche 1-3, dadurch gekennzeichnet, daß sie als Komponente c) eine Verbindung der allgemeinen Formel (R¹)₂P-R-P(R¹)₂ enthalten, worin R¹ einen gegebenenfalls polar substituierten Kohlenwasserstoffrest und R eine zweiwertige organische Brückengruppe mit mindestens zwei Kohlenstoffatomen in der Brücke bedeutet.

5. Zusammensetzungen nach Anspruch 4, dadurch gekennzeichnet, daß sie 0,5-2 mol der Komponente c) pro Grammatom des Metalls der Gruppe VIII enthalten.

6. Verfahren zur Herstellung von Polymerisaten, dadurch gekennzeichnet, daß man Polymerisate aus Kohlenmonoxid und einer oder mehreren olefinisch ungesättigten Verbindungen durch Inberührungbringen der Monomere bei einer Temperatur von 25-150°c und einem Druck von 2-150 bar mit einer Katalysatorzusammensetzung gemäß einem der Ansprüche 1-5 herstellt.

7. Verfahren nach Anspruch 6, dadurch gekennzeichnet, daß man die Polymerisation als Flüssigphasenpolymerisation durch Inberührungbringen der Monomere mit einer Lösung der Katalysatorzusazmensetzung in einem flüssigen, nichtpolymerisierbaren Verdünnungsmittel, in welchem die Polymerisate unlöslich oder schwer löslich sind, durchführt.

8. Verfahren nach Anspruch 6, dadurch gekennzeichnet, daß man die Polymerisation als Gasphasenpolymerisation durch Inberührungbringen der Monomere mit der Katalysatorzusammensetzung im wesentlichen in Abwesenheit eines flüssigen, nichtpolymerisierbaren Verdünnungsmittels durchführt.

9. Verfahren nach einem der Ansprüche 6-8, dadurch gekennzeichnet, daß man pro Mol zu polymerisierende olefinisch ungesättigte Verbindung eine Menge an Katalysatorzusammensetzung, die 10⁻⁷-10⁻³ Grammatom des Metalls der Gruppe VIII enthält, einsetzt und daß man es bei einer Temperatur von 30-130°c und einem Druck von 5-100 bar und mit einem Molverhältnis der olefinisch ungesättigten Verbindungen zu Kohlenmonoxid von 10:1 bis 1:10 durchführt.

## Patentansprüche (Patentansprüche für folgende(n) Vertragsstaat(en): ES)

1. Verfahren zur Herstellung einer Katalysatorzusammensetzung, dadurch gekennzeichnet, daß man combiniert :
a) eine Verbindung eines Metalls der Gruppe VIII,
b) eine Lewis-Säure der allgemeinen Formel MFₙ, worin M ein Element, das mit Fluor eine Lewis-Säure bilden kann, bedeutet, F für Fluor steht und n einen Wert von 3 oder 5 hat, und
c) einen zähnigen Liganden, der mindestens zwei phosphor-, stickstoff- oder schwefelhaltige zähnige Gruppen enthält, durch die der zähnige Ligand einen Komplex mit dem Metall der Gruppe VIII bilden kann.

2. Verfahren nach Anspruch 1, dadurch gekennzeichnet, daß man als Komponente b) Bortrifluorid, Aluminiumtrifluorid oder Antimonpentafluorid einsetzt.

3. Verfahren nach Anspruch 1 oder 2, dadurch gekennzeichnet, daß man die Komponente b) in einer Menge von 0,5-200 mol pro Grammatom des Metalls der Gruppe VIII einsetzt.

4. Verfahren nach einem der Ansprüche 1-3, dadurch gekennzeichnet, daß man als Komponente c) eine Verbindung der allgemeinen Formel (R¹)₂P-R-P(R¹)₂ einsetzt, worin R¹ einen gegebenenfalls polar substituierten Kohlenwasserstoffrest und R eine zweiwertige organische Brückengruppe mit mindestens zwei Kohlenstoffatomen in der Brücke bedeutet.

5. Verfahren nach Anspruch 4, dadurch gekennzeichnet, daß man 0,5-2 mol der Komponente c) pro Grammatom des Metalls der Gruppe VIII einsetzt.

6. Verfahren zur Herstellung von Polymerisaten, dadurch gekennzeichnet, daß man Polymerisate aus Kohlenmonoxid und einer oder mehreren olefinisch ungesättigten Verbindungen durch Inberührungbringen der Monomere bei einer Temperatur von 25-150°C und einem Druck von 2-150 bar mit einer Katalysatorzusammensetzung gemäß einem der Ansprüche 1-5 herstellt.

7. Verfahren nach Anspruch 6, dadurch gekennzeichnet, daß man die Polymerisation als Flüssigphasenpolymerisation durch Inberührungbringen der Monomere mit einer Lösung der Katalysatorzusammensetzung in einem flüssigen, nichtpolymerisierbaren Verdünnungsmittel, in welchem die Polymerisate unlöslich oder schwer löslich sind, durchführt.

8. Verfahren nach Anspruch 6, dadurch gekennzeichnet, daß man die Polymerisation als Gasphasenpolymerisation durch Inberührungbringen der Monomere mit der Katalysatorzusammensetzung im wesentlichen in Abwesenheit eines flüssigen, nichtpolymerisierbaren Verdünnungsmittels durchführt.

9. Verfahren nach einem der Ansprüche 6-8, dadurch gekennzeichnet, daß man pro Mol zu polymerisierende olefinisch ungesättigte Verbindung eine Menge an Katalysatorzusammensetzung, die 10⁻⁷-10⁻³ Grammatom des Metalls der Gruppe VIII enthält, einsetzt und daß man es bei einer Temperatur von 30-130°C und einem Druck von 5-100 bar und mit einem Molverhältnis der olefinisch ungesättigten Verbindungen zu Kohlenmonoxid von 10:1 bis 1:10 durchführt.

## Revendications (Revendications pour l'(les) Etat(s) contractant(s) suivant(s): BE, DE, FR, GB, IT, NL)

1. Compositions de catalyseurs, caractérisées en ce qu'elles sont à base :
a) d'un composé d'un métal du groupe VIII,
b) d'un acide de Lewis de la formule générale MFₙ, dans laquelle M représente un élément qui peut former un acide de Lewis avec le fluor, F représente le fluor et n est égal à 3 ou à 5, et
c) d'un ligand dentate contenant au moins deux groupes dentates contenant du phosphore, de l'azote, ou du soufre, par l'intermédiaire desquels le ligand dentate peut se complexer au métal du groupe VIII.

2. Compositions de catalyseurs suivant la revendication 1, caractérisées en ce qu'elles contiennent du trifluorure de bore, du trifluorure d'aluminium ou du pentafluorure d'antimoine à titre de composant b).

3. Compositions suivant la revendication 1 ou 2, caractérisées en ce qu'elles contiennent 0,5 à 200 moles de composant b) par atome-gramme de métal du groupe VIII.

4. Compositions suivant l'une quelconque des revendications 1 à 3, caractérisées en ce qu'elles contiennent, à titre de composant c), un composé répondant à la formule générale (R¹)₂P-R-P(R¹)₂, dans laquelle R¹ représente un groupe hydrocarbyle à substitution polaire éventuelle et R représente un groupe de pontage organique bivalent contenant au moins deux atomes de carbone dans le pont.

5. Compositions suivant la revendication 4, caractérisées en ce qu'elles contiennent 0,5 à 2 moles de composant c) par atome-gramme de métal du groupe VIII.

6. Procédé de préparation de polymères, caractérisé en ce que l'on prépare des polymères du monoxyde de carbone et d'un ou plusieurs composés à insaturation oléfinique par la mise en contact des monomères à une température de 25 à 150°c et sous une pression de 2 à 150 bars avec une composition de catalyseur, suivant l'une quelconque des revendications 1 à 5.

7. Procédé suivant la revendication 6, caractérisé en ce que l'on entreprend la polymérisation sous forme de polymérisation en phase liquide par la mise en contact des monomères avec une solution de la composition de catalyseur dans un diluant liquide non polymérisable, dans lequel les polymères sont insolubles ou virtuellement insolubles.

8. Procédé suivant la revendication 6, caractérisé en ce que l'on entreprend la polymérisation sous forme de polymérisation en phase gazeuse par la mise en contact des monomères avec la composition de catalyseur sensiblement en l'absence de diluant liquide non polymérisable.

9. Procédé suivant l'une quelconque des revendications 6 à 8, caractérisé en ce que, par mole de composé à insaturation oléfinique à polymériser, on utilise une quantité de composition de catalyseur qui contient 10⁻⁷ à 10⁻³ atome-gramme de métal du groupe VIII et en ce qu'on l'entreprend à une température de 30 à 130°C et sous une pression de 5 à 100 bars et en ce que le rapport molaire des composés à insaturation oléfinique au monoxyde de carbone varie de 10:1 à 1:10.

## Revendications (Revendications pour l'(les) Etat(s) contractant(s) suivant(s): ES)

1. Procédé de préparation d'une composition de catalyseur, caractérisé en ce que l'on combine :
a) un composé d'un métal du groupe VIII,
b) un acide de Lewis de la formule générale MFₙ, dans laquelle M représente un élément qui peut former un acide de Lewis avec le fluor, F représente le fluor et n est égal à 3 ou à 5, et
c) un ligand dentate contenant au moins deux groupes dentates contenant du phosphore, de l'azote, ou du soufre, par l'intermédiaire desquels le ligand dentate peut se complexer au métal du groupe VIII.

2. Procédé suivant la revendication 1, caractérisé en ce que l'on choisit le composant b) parmi le trifluorure de bore, le trifluorure d'aluminium et le pentafluorure d'antimoine.

3. Procédé suivant la revendication 1 ou 2, caractérisé en ce que l'on applique le composant b) en une proportion de 0,5 à 200 moles par atome-gramme de métal du groupe VIII.

4. Procédé suivant l'une quelconque des revendications 1 à 3, caractérisé en ce que le composant c) est un composé répondant à la formule générale (R¹)₂P-R-P(R¹)₂, dans laquelle R¹ représente un groupe hydrocarbyle à substitution polaire éventuelle et R représente un groupe de pontage organique bivalent contenant au moins deux atomes de carbone dans le pont.

5. Procédé suivant la revendication 4, caractérisé en ce que le composant c) est appliqué en une quantité de 0,5 à 2 moles par atome-gramme de métal du groupe VIII.

6. Procédé de préparation de polymères, caractérisé en ce que l'on prépare des polymères du monoxyde de carbone avec un ou plusieurs composés à insaturation oléfinique par la mise en contact des monomères à une température de 25 à 150°C et sous une pression de 2 à 150 bars avec une composition de catalyseur que l'on peut obtenir par mise en oeuvre du procédé suivant l'une quelconque des revendications 1 à 5.

7. Procédé suivant la revendication 6, caractérisé en ce que l'on entreprend la polymérisation sous forme de polymérisation en phase liquide par la mise en contact des monomères avec une solution de la composition de catalyseur dans un diluant liquide non polymérisable, dans lequel les polymères sont insolubles ou virtuellement insolubles.

8. Procédé suivant la revendication 6, caractérisé en ce que l'on entreprend la polymérisation sous forme de polymérisation en phase gazeuse par la mise en contact des monomères avec la composition de catalyseur sensiblement en l'absence de diluant liquide non polymérisable.

9. Procédé suivant l'une quelconque des revendications 6 à 8, caractérisé en ce que, par mole de composé à insaturation oléfinique à polymériser, on utilise une quantité de composition de catalyseur qui contient 10⁻⁷ à 10⁻³ atome-gramme de métal du groupe VIII et en ce qu'on l'entreprend à une température de 30 à 130°C et sous une pression de 5 à 100 bars et en ce que le rapport molaire des composés à insaturation oléfinique au monoxyde de carbone varie de 10:1 à 1:10.
